# EUROPÄISCHE PATENTANMELDUNG

(11) **EP 3 202 996 A1**
(43) Veröffentlichungstag der Anmeldung: **09.08.2017**
(21) Anmeldenummer: 17154430.7
(22) Anmeldetag: 02.02.2017
(51) Int. Cl.: E04G 7/30, F16B 7/04

(54) **GERÜSTSTIEL FÜR EIN BAUGERÜST**

(30) Priorität: 04.02.2016 DE 102016201734
(71) Anmelder: MJ-Gerüst GmbH, 58840 Plettenberg (DE)
(72) Erfinder: Schmelzer, Robert, 57368 Lennestadt (DE)
(74) Vertreter: Grosse, Wolf-Dietrich Rüdiger

(57) **Zusammenfassung**

Die Erfindung betrifft einen Gerüststiel für ein Baugerüst

Gerüststiele für Baugerüste sind im Stand der Technik grundsätzlich hinlänglich bekannt. Sie bestehen typischerweise aus einem Rohr (110) und einem mit dem Rohr verschweißten Rohrverbinder (120) zum Aufstecken eines weiteren Rohres, wenn das Gerüst in die Höhe gebaut werden soll.

Die Erfindung schlägt einen alternativen Gerüststiel vor, wobei der Gerüststiel dadurch gekennzeichnet ist, dass die Aufstandsfläche (132) ringförmig ausgebildet ist; der Außendurchmesser des Flansches (130) größer als der Außendurchmesser des Rohres (110) ist; der Rohrverbinder (120) in Form einer Rohrhülse ausgebildet ist; und das Rohr (110) und der Rohrverbinder (120) aus unterschiedlichen Materialien gefertigt sind.

## Beschreibung

Die Erfindung betrifft einen Gerüststiel für ein Baugerüst aus Metall.

Derartige Gerüststiele, welche typischerweise Teil eines Gerüstrahmens sind, sind im Stand der Technik grundsätzlich bekannt. Insbesondere ist es bekannt, dass ein Gerüststiel typischerweise aus einem Rohr und einem Rohrverbinder besteht. Der Rohrverbinder weist typischerweise einen geringeren Durchmesser als das Rohr auf und ist - bei senkrechtem Aufstand des Rohres - an dem oberen Ende des Rohres angebracht. Der Rohrverbinder dient als Halterung bzw. als Verbindungselement für ein auf ihn aufgestecktes weiteres Rohr beim Aufbau bzw. bei der Erhöhung eines Baugerüstes um eine weitere Ebene.

Im Stand der Technik sind verschiedene Ausführungsformen des Rohrverbinders und verschiedene Methoden bekannt, wie ein jeweiliger Rohrverbinder mit dem oberen Ende eines Rohres verbunden wird.

So offenbart die deutsche Offenlegungsschrift DE 26 54 439, dass sogenannte lose Rohrverbinder benutzt werden, die als gesenkgeschmiedete Teile hergestellt werden, die in der Mitte einen Auflagewulst für das nächste aufzusetzende Rohr haben und die jeweils als lose Teile in das obere Ende eines Rohres eingesetzt werden. Eine analoge Offenbarung findet sich ebenfalls in der deutschen Gebrauchsmusteranmeldung DE 1 972 690. Diese losen Rohrverbinder gehen oft verloren, und weil sie nur lose in ein Gerüstrohr eingesteckt werden, besteht bei ihrer Verwendung die Gefahr des Abhebens von oberen Gerüstteilen bei Windeinfluss. Sie sind für Hängegerüste nicht verwendbar. Aufgrund von nicht passgenauer Herstellung weisen sie oftmals ein radiales Spiel auf und haben deshalb als statischen Nachteil eine nur geringe Knickstabilität. Bei Biegebeanspruchungen treten in der Praxis oftmals recht große Drehmomente und Verkantungen an den Verbindungsstellen Rohrverbinder und Rohr auf, denen die Rohrverbinder nicht immer standhalten. Als Schmiedeteile ist ihre Herstellung recht aufwändig und sie sind nachteiliger Weise recht schwer.

Sowohl die DE 26 54 439 wie auch das Gebrauchsmuster 1 972 690 offenbaren alternativ Rohrverbinder, welche lediglich als Rohrhülse ohne Wulst ausgebildet sind und die nach Einsetzen in das obere Ende des Rohres z. B. durch eine Einschweißung oder Einpressung mit dem Rohr verbunden werden. Bei dieser Verbindung verbleibt oftmals ein großes radiales Spiel, und es resultiert ein großer radialer Versatz mit nur geringem Formschluss der aufeinander gesteckten Gerüstteile. Dies führt zu einer reduzierten Aufstandsfläche und einer dementsprechend erhöhten spezifischen Flächenpressung bei gleichzeitig reduzierter Kraft- bzw. Lastübertragung. Bei Biegebeanspruchung kann es dementsprechend zu vergrößerten Drehmomenten und Verkantungen an den Verbindungsstellen und damit zu einer erhöhten Bruchgefahr kommen. Um das Kippmoment dennoch möglichst gering zu halten, muss die in das Rohr eingeführte Länge des Rohrverbinders verhältnismäßig groß sein, woraus ein erhöhtes Gewicht resultiert. Wenn der Rohrverbinder nur als Rohrhülse ohne Wulst ausgebildet ist, verbleibt nur die Stirnseite des Rohres als Aufstandsfläche für ein darauf aufgesetztes weiteres Rohr einer oberen Gerüstetage. Diese Auflagefläche ist aber in der Regel nicht genau senkrecht und plan zur Längsachse des Rohres gefertigt, so dass es nur zu einer punktuellen Teilauflage der entsprechenden Stirnseite des weiteren Rohres mit einer daraus resultierenden erhöhten Flächenpressung kommt. Insbesondere bei den nur eingepressten Rohrverbindern besteht die Gefahr, dass sie einer großen Zugbelastung, wie sie beispielsweise bei Hängegerüsten vorkommt, nicht Stand halten.

Weiterhin sind einteilige Gerüststiele bekannt, bei denen das Rohr und der Rohrverbinder, ggf. mit einem Flansch im Übergangsbereich zwischen Rohr und Rohrverbinder, z. B. durch Kaltumformung/Stauchung einstückig ausgebildet sind. Die einstückige Ausbildung des Rohrverbinders an dem Rohr durch Stauchung bedeutet eine erhebliche Materialbelastung, die oftmals eine Rissbildung und Kerbwirkung zur Folge hat, wodurch nachteiligerweise grade der Übergangsbereich zwischen zwei aufeinander gesetzten Gerüstetagen erheblich geschwächt wird. Die Schwächung wird verstärkt durch die Gefahr einer Versprödung bei der Verformung und einer anschließenden Verzinkung sowie eine z.T. nur begrenzte Wanddicke im Bereich der Verformung. Außerdem ist die Auflagefläche des Flansches in der Regel nicht genau senkrecht und plan zur Längsachse des Rohres gefertigt, so dass es nur zu einer punktuellen Teilauflage der Stirnseite des aufgesteckten weiteren Rohres auf dem Flansch mit einer daraus resultierenden erhöhten Flächenpressung kommt. Schließlich kann es aufgrund unterschiedlicher Herstellungsprozesse zu unterschiedlichen Festigkeiten und Wanddicken der Rohre und damit ebenfalls zu einer Schwächung des Übergangsbereichs kommen.

Die DE 23 26 736 A offenbart die Merkmale des Oberbegriffs des Anspruchs 1.

Der Erfindung liegt die Aufgabe zugrunde, einen alternativen Gerüststiel bereitzustellen.

Diese Aufgabe wird durch den Gegenstand des Anspruchs 1 gelöst.

Eine Schweißverbindung im Sinne der Erfindung meint eine durch Schweißen hergestellte Verbindung zwischen zwei Bauteilen. Schweißen meint das unlösbare Verbinden von Bauteilen unter Anwendung von Wärme und / oder Druck, mit oder ohne Zusatzwerkstoffen.

Die vorliegende Erfindung geht aus einem Rohr und einem Rohrverbinder hervor, letzterer mit einem einstückig ausgebildeten Flansch, auch Schulter genannt, wobei das Rohr und der Rohrverbinder zunächst als separate Teile gefertigt werden. Erst die Erfindung sieht das Zusammenfügen der beiden Einzelteile durch Verschweißen vor. Das beanspruchte Verschweißen hat den Vorteil, dass es unabhängig erfolgen kann von der Profil- bzw. Querschnittsform, der Wandstärke und der Qualität, insbesondere der Festigkeit der zu verschweißenden Teile, hier des Rohres und des Rohrverbinders. Weiterhin ist es vorteilhaft, dass auch fertigungsbedingte Toleranzen bei dem Rohr oder dem Rohrverbinder einem Verschweißen nicht im Wege stehen und keinen wesentlichen Einfluss auf die Tragfähigkeit des Gerüststiels haben.

Das beanspruchte einstückige Ausbilden des Flansches an dem Rohrverbinder vor dem Verschweißen mit dem Rohr bietet den Vorteil, dass der Flansch mit seiner dem Rohr abgewandten Aufstandsfläche besonders präzise gefertigt werden kann. Besonders präzise meint in diesem Zusammenhang, dass die Aufstandsfläche tatsächlich möglichst vollständig in einer Ebene quer zur Längsachse des Rohrverbinders liegt, so dass eine große horizontale Kontaktfuge ausgebildet wird zwischen dem Flansch und einem später darauf zu stellendem weiteren Rohr. Dies ist von nicht zu unterschätzender Bedeutung, damit das untere Ende bzw. die Stirnfläche des beim Aufbauen des Gerüstes auf die Aufstandsfläche aufgestellten weiteren Rohres möglichst vollflächig auf der Aufstandsfläche aufsteht. Nur dann können große Kräfte von dem oberen aufgestellten Rohr in das untere Rohr übertragen werden, ohne dass es zu einer punktuellen Überbelastung im Bereich der Aufstandsfläche kommt.

Aus Kostengründen kann es hilfreich sein, dass Rohr und Rohrverbinder aus unterschiedlichen Materialien gefertigt werden können; dieser Vorteil kann insbesondere dann realisiert werden, wenn bei absehbarer schwächerer Belastung entweder des Rohres oder des Rohrverbinders preisgünstigere Materialien zur Herstellung des Rohres oder des Rohrverbinders verwendet werden können.

Dass der Außendurchmesser des Flansches, wie beansprucht, größer als der Außendurchmesser des Rohres ist, bietet den Vorteil, dass auch bei einer nicht exakt zentrischen Einführung des Rohrverbinders in das obere Ende des Rohres dennoch immer eine möglichst vollflächige Auflage der dem Rohr zugewandten Aufstandsfläche des Flansches auf der gegenüberliegenden oberen Stirnseite des Rohres gewährleistet ist; dies ist von ganz wesentlicher Bedeutung, wiederum um die auftretenden Kräfte möglichst gleichmäßig über den Umfang des Rohres verteilt in den unteren Gerüststiel einleiten zu können bzw. um den hohen Sicherheitsanforderungen im Gerüstbau genügen zu können.

Gemäß einem ersten Ausführungsbeispiel bildet der Flansch das rohrseitige Ende des Rohrverbinders. Gemäß einem alternativen Ausführungsbeispiel wird das eigentliche rohrseitige Ende des Rohrverbinders durch einen Rohrfortsatz gebildet, welcher vorzugsweise einstückig und koaxial zur Längsachse des Rohrverbinders an den Flansch angeformt ist. Der Rohrverbinder dient zum zentrischen Einführen des Rohrverbinders in das Rohr, insbesondere vor dem Verschweißen. Der Rohrfortsatz im Sinne der Erfindung dient lediglich zum zentrischen Einführen des Rohrverbinders in das Rohr; seine Länge muss deshalb nicht größer als 2 cm sein. Der Rohrfortsatz erfüllt damit nicht die Bedingungen, die an Rohrverbinder und deren Rohrfortsätze gestellt werden, wie sie im Stand der Technik bekannt sind, wo die Fortsätze von Rohrverbindern möglichst weit in ein Ende eines Rohres eingesteckt werden, um ein möglichst geringes (Kipp-)Spiel zwischen dem Rohr und dem Rohrverbinder zuzulassen. Die Problematik des möglichst geringen Spiels stellt sich bei der vorliegenden Erfindung aufgrund der beanspruchten Verschweißung von Rohr und Rohrverbinder nicht; deshalb kann der erfindungsgemäße Rohrfortsatz auch nur die relativ kleine beanspruchte Länge aufweisen.

Zum Einführen des Rohrverbinders in das Rohr ist es vorteilhaft, wenn der Rohrfortsatz derart konisch ausgebildet ist, dass er sich - ausgehend von dem Flansch
- zu dem rohrseitigen Ende des Rohrverbinders hin verjüngt, wobei der Außendurchmesser des konischen Rohrfortsatzes im Übergangsbereich zu dem Flansch
- zumindest im Wesentlichen - dem Innendurchmesser des Rohres entspricht. Dies ist insbesondere von Bedeutung, wenn Rohr und Rohrverbinder mit dem so genannten Buckel-Schweißverfahren verschweißt werden, denn in diesem Fall dienen zumindest Teile des Rohrfortsatzes als Material für den Schweißvorgang.

Gemäß einem weiteren Ausführungsbeispiel ist eine einstückig mit dem Rohrverbinder ausgebildete Verdickung vorgesehen, die sich auf Höhe des Flansches radial in das Innere des Rohrverbinders hinein erstreckt. Das Material der Verdickung ist vorzugsweise optimal, das heiß möglichst gleichmäßig über den Umfang des Rohrverbinders verteilt angeordnet. Die so ausgebildete Verdickung bietet den Vorteil, dass bei Belastung des Gerüstes von dem Gerüststiel größere Biegemomente aufgenommen werden können als ohne die Verdickung. Ohne die Verdickung besteht für den Gerüststiel im Bereich des Flansches eine größere Bruchgefahr bei Belastung.

### Vorteilhafte Ausgestaltungen des Gerüststiels

Der Erfindung sind vier Figuren beigefügt, wobei
- Figur 1: ein erstes Ausführungsbeispiel für den erfindungsgemäßen Rohrverbinder;
- Figur 2: ein zweites Ausführungsbeispiel für den erfindungsgemäßen Rohrverbinder in einer ersten Variante;
- Figur 3: eine zweite Variante des zweiten Ausführungsbeispiels für den Rohrverbinder und diesen eingesteckt in das obere Ende eines Rohres; und
- Figur 4: eine Übersicht über verschiedene Schweißverfahren
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

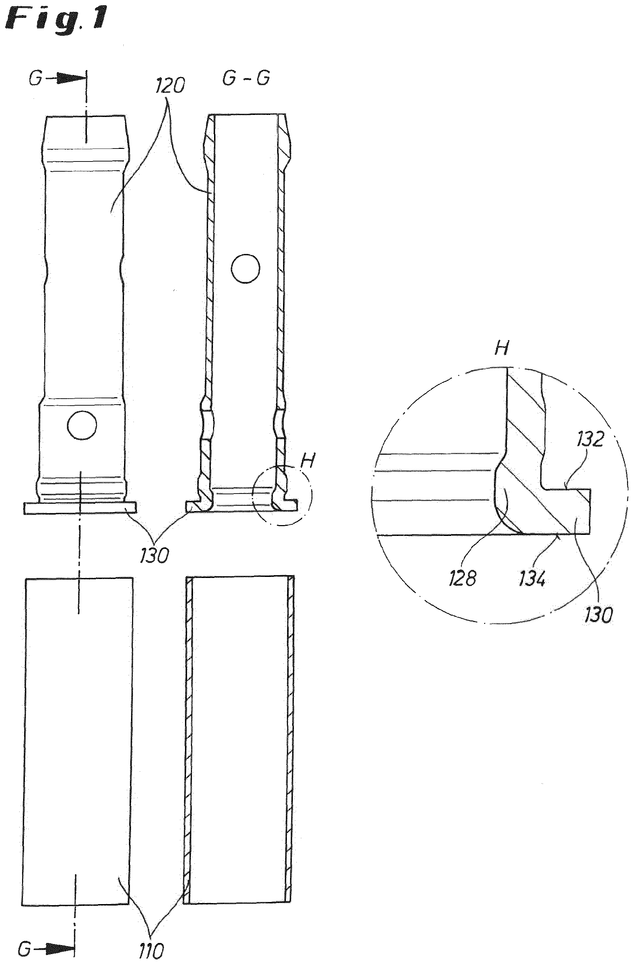

Figur 1 zeigt in einem linken Bild eine vertikale Gegenüberstellung des Rohres 110 und eines Rohrverbinders 120 als zunächst separate Bauteile eines Gerüststieles 100 in einer Draufsicht. Das mittlere Bild zeigt das Rohr 110 und den Rohrverbinder 120 in aufgeschnittenem Zustand. Das rechte Bild in Figur 1 zeigt eine Detailansicht des mittleren Bildes; konkret ist zu erkennen, wie ein Flansch 130 einstückig an dem rohrseitigen Ende des Rohrverbinders 120 ausgebildet ist. Konkret ist in dem rechten Bild die dem Rohr 110 abgewandte Aufstandsfläche 132, die dem Rohr 110 zugewandte Aufstandsfläche 134 des Flansches und eine Verdickung 128 im Bereich des Flansches 130 zu erkennen.

Die Ausbildung des Flansches 130 mit seinen beiden Aufstandsflächen 132, 134 erfolgt vorzugsweise durch Kaltumformung des Rohrverbinders, beispielsweise durch Kneten oder Ringhämmern desselben. Die genannten Verfahren ermöglichen optional auch die Ausbildung der besagten Verdickung 128, die sich im Bereich des Flansches in das Innere des Rohrverbinders hinein erstreckt. Die genannten Verfahren bieten insbesondere den Vorteil, dass die beiden Aufstandsflächen mit einer gewünschten Genauigkeit planiert ausgebildet werden können, d. h. dass sie jeweils mit einer gebotenen Genauigkeit eine Ebene senkrecht zur Längsachse des Rohrverbinders aufspannen.

Bei dem in Figur 1 gezeigten ersten Ausführungsbeispiel bildet der Flansch 130 das rohrseitige Ende des Rohrverbinders 120.

Bei der in Figur 1 gezeigten ersten Ausführungsform des Gerüststiels ist erfindungsgemäß vorgesehen, dass die plane Aufstandsfläche 134, d. h. die Unterseite des Flansches 130 stumpf auf die zugeordnete gegenüberliegende Stirnseite des Rohres aufgesetzt und dann mit dieser verschweißt wird. Um sicherzustellen, dass die dem Rohr abgewandte Aufstandsfläche 132 auch nach dem Verschweißen noch senkrecht zur Längsachse des Rohres 110 ausgerichtet empfiehlt es sich, vor dem Verschweißen die entsprechende Stirnseite des Rohres 110 so zu planieren, dass sie vollständig in einer Ebene senkrecht zur Längsachse des Rohres liegt.

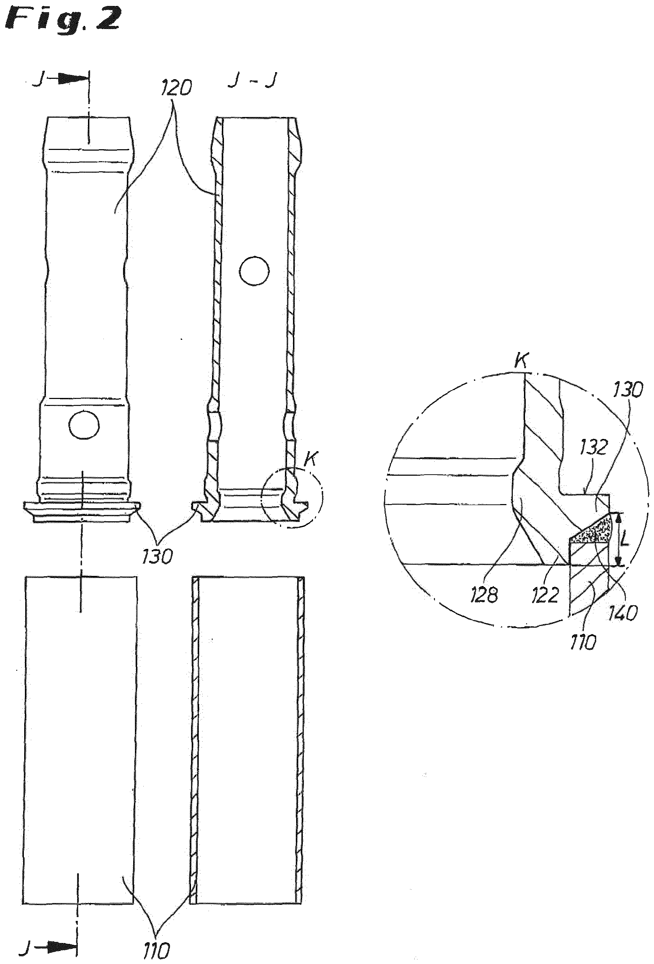

Figur 2 zeigt im Unterschied dazu ein zweites Ausführungsbeispiel für die Ausgestaltung des rohrseitigen Endes des Rohrverbinders 120 in einer ersten Variante. Das zweite Ausführungsbeispiel unterscheidet sich von dem ersten Ausführungsbeispiel durch einen rohrseitig an den Flansch 130 angeformten Rohrfortsatz 122. Der Rohrfortsatz ist vorzugsweise einstückig mit dem Rohrverbinder und dem Flansch ausgebildet und koaxial zur Längsachse des Rohrverbinders ausgerichtet. Der Rohrfortsatz dient lediglich zum zentrischen Einführen des Rohrverbinders in das Rohr 110; der Rohrfortsatz muss nicht über seine gesamte Länge Biegemomente in das Rohr einleiten. Deswegen kann er im Vergleich zu den aus dem Stand der Technik bekannten Rohrfortsätzen bei Rohrverbindern relativ kurz gehalten werden; vorzugsweise beträgt seine Länge L nicht mehr als 2 cm, weiter vorzugsweise nur weniger als 1 cm. Die in Figur 2 im rechten Bild zu erkennende besagte Schräge an der Unterseite des Flansches bildet mit der Stirnseite des Rohres 110 eine umlaufende Hohlkehle mit V-förmigem Querschnitt zur Aufnahme der umlaufenden Schweißnaht 140. Bei dem erfindungsgemäßen Verschweißen von Rohrverbinder 120 und Rohr 110 werden die besagte Stirnseite und Schräge zumindest teilweise aufgeschmolzen.

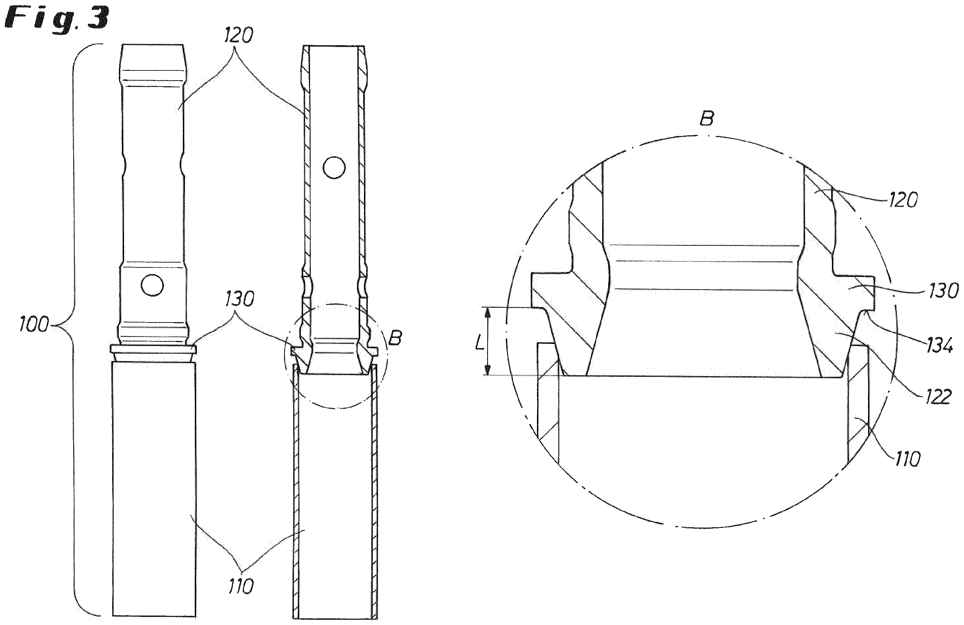

Figur 3 zeigt den Rohrverbinder 120 und das Rohr 110 in zusammengestecktem Zustand kurz vor dem Verschweißen. Auch in Figur 3 zeigt das linke Bild den Rohrverbinder und das Rohr in einer Draufsicht, das mittlere Bild den Rohrverbinder und das Rohr in aufgeschnittenem Zustand und das rechte Bild den Übergangsbereich von Rohrverbinder und Rohr in einer vergrößerten Detailansicht. Gut zu erkennen ist in dem rechten Bild, dass der Rohrfortsatz 122 konisch ausgebildet ist und sich - ausgehend von dem Flansch 130 - zu dem rohrseitigen Ende des Rohrverbinders hin verjüngt. Der Außendurchmesser des konischen Rohrfortsatzes am Übergang von Rohrfortsatz 122 zu Flansch 130 ist hier geringfügig größer als der Innendurchmesser des Rohres 110; dies ist jedoch unschädlich, denn bei dem nachfolgenden Verschweißen von Rohrverbinder 120 und Rohr 110 genau im Bereich des Rohrfortsatzes 122 wird dieser über seinen gesamten Umfang aufgeschmolzen, so dass es zu einer stabilen Verbindung zwischen Rohrverbinder und Rohr kommt, wobei dann der Flansch 130 mit seiner dem Rohr zugewandten Aufstandsfläche 134 auf der gegenüberliegenden Stirnseite des Rohres 110 aufliegt.

In allen gezeigten Bildern in Figur 3 ist der Rohrverbinder 120 in Form einer Rohrhülse ausgebildet. Außerdem ist überall zu erkennen, dass der Außendurchmesser des Flansches größer dem Außendurchmesser des Rohres ist.

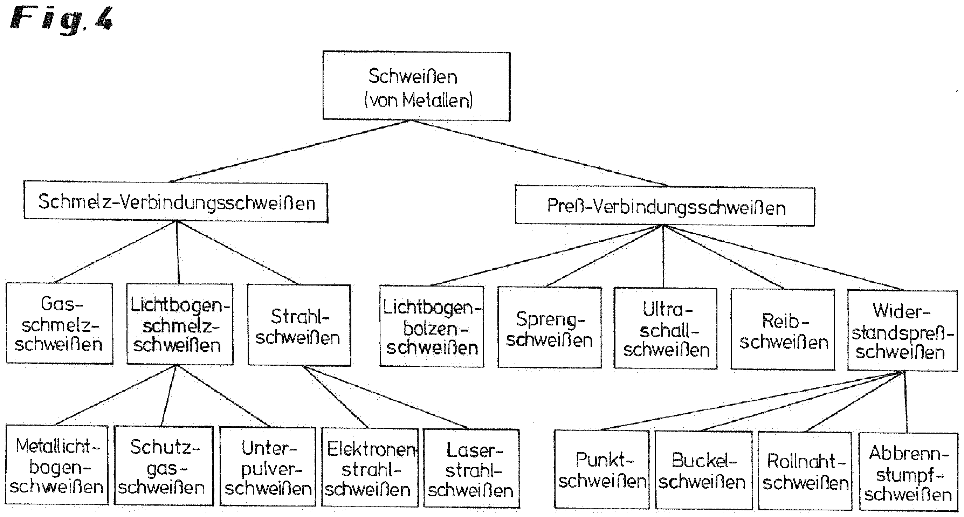

Figur 4 zeigt eine Übersicht über verschiedene Schweißverfahren und deren begriffliche Zuordnung untereinander. Für die Erfindung kommen grundsätzlich alle Schweißverfahren in Betracht, die eine umlaufende Schweißverbindung zwischen Flansch und Stirnseite des Rohres ermöglichen. Dies können grundsätzlich Schmelz-Verbindungsschweißverfahren oder Press-Verbindungsschweißverfahren sein mit den in der Übersicht gezeigten Unterkategorien. Bei dem Schmelz-Verbindungsschweißen eignet sich besonders Laserschweißen, während bei dem Press-Verbindungsschweißen insbesondere Reibschweißen oder Widerstandsschweißen von Vorteil sind. Als Form des Widerstandsschweißens hat sich insbesondere das Buckelschweißen zum Verbinden von Rohrverbinder 120 und Rohr 110 bewährt, weil bei diesem Verfahren ein elektrischer Strom insbesondere durch den Flansch und den Rohrfortsatz sowie durch das zugeordnete Ende des Rohres 110 geleitet wird, welcher ein Aufschmelzen des Rohrfortsatzes und der den Rohrfortsatz kontaktierenden Stirnseite des Rohres 110 bewirkt, so dass die beiden Teile dann sehr einfach passgenau zusammengefügt werden können. Wie gesagt, bei dem Buckelschweißen dient der Rohrfortsatz 122 als Buckel.

Der Rohrverbinder kann als Gussteil, durch Schmiedehämmern oder als Drehteil hergestellt werden. Vor dem Verschweißen von Rohrverbinder mit dem Rohr 110 ist es vorteilhaft, dass die Stirnseite des Rohres 110, die die von dem Flansch übertragenen Kräfte möglichst optimal aufnehmen soll, ebenfalls derart planiert wird, dass sie in einer Ebene senkrecht zur Längsachse des Rohres liegt.

### Bezugszeichenliste

- 100: Gerüststiel
- 110: Rohr
- 120: Rohrverbinder
- 122: Rohrfortsatz
- 128: Verdickung
- 130: Flansch
- 132: dem Rohr abgewandte Aufstandsfläche des Flansches
- 134: dem Rohr zugewandte ringförmige Aufstandsfläche des Flansches
- 140: umlaufende Schweißnaht
- L: Länge des Rohrfortsatzes

## Patentansprüche

1. Gerüststiel (100) mit
einem Rohr (110); und
einem mit dem Rohr verschweißten Rohrverbinder (120);
wobei der Rohrverbinder (120) im Bereich seines rohrseitigen Endes einen mit dem Rohrverbinder einstückig ausgebildeten Flansch (130) mit einer ringförmigen Aufstandsfläche (132) aufweist; und
wobei der Flansch (130) - und damit auch der Rohrverbinder - an seiner dem Rohr zugewandten Seite mit einer umlaufenden Schweißverbindung mit dem Rohr verschweißt ist,
**dadurch gekennzeichnet, dass**
die Aufstandsfläche (132) ringförmig ausgebildet ist;
der Außendurchmesser des Flansches (130) größer als der Außendurchmesser des Rohres (110) ist;
der Rohrverbinder (120) in Form einer Rohrhülse ausgebildet ist; und das Rohr (110) und der Rohrverbinder (120) aus unterschiedlichen Materialien gefertigt sind.

2. Gerüststiel (100) nach Anspruch 1,
**dadurch gekennzeichnet, dass**
der Flansch (130) das rohrseitige Ende des Rohrverbinders (120) bildet.

3. Gerüststiel (100) nach Anspruch 1,
**dadurch gekennzeichnet, dass**
das rohrseitige Ende des Rohrverbinders (120) einen Rohrfortsatz (122) aufweist, welcher vorzugsweise einstückig und koaxial zur Längsachse des Rohrverbinders an den Flansch (130) angeformt ist zum zentrischen Einführen des Rohrverbinders (120) in das Rohr, wobei für die Länge L des Rohrfortsatzes gilt: L<2cm, vorzugsweise L<1 cm.

4. Gerüststiel (100) nach Anspruch 3,
**dadurch gekennzeichnet, dass**
der Rohrfortsatz (122) derart konisch ausgebildet ist, dass er sich - ausgehend von dem Flansch (130) - zu dem rohrseitigen Ende des Rohrverbinders hin verjüngt, wobei der Außendurchmesser des konischen Rohrfortsatzes im Übergang zu dem Flansch - zumindest im Wesentlichen - vorzugsweise dem Innendurchmesser des Rohres (110) entspricht.

5. Gerüststiel (100) nach einem der vorangegangenen Ansprüche,
**dadurch gekennzeichnet, dass**
der Rohrverbinder (120) im Bereich des Flansches (130) eine einstückig mit dem Rohrverbinder (120) ausgebildete Verdickung (128) gegenüber seiner sonstigen Wandstärke aufweist, wobei sich die Verdickung in das Innere des Rohrverbinders (120) hinein erstreckt.
